# EUROPEAN PATENT APPLICATION

(11) **EP 3 211 527 A1**
(43) Date of publication of application: **30.08.2017**
(21) Application number: 15852682.2
(22) Date of filing: 20.01.2015
(51) Int. Cl.: G06F 9/445, G06F 3/14

(54) **MULTI-SCREEN SHARING BASED APPLICATION MANAGEMENT METHOD AND DEVICE, AND STORAGE MEDIUM**

(30) Priority: 24.10.2014 CN 201410578285
(71) Applicant: ZTE Corporation, Shenzhen, Guangdong 518057 (CN)
(72) Inventor: HE, Xiang, Shenzhen Guangdong 518057 (CN); ZHANG, Lei, Shenzhen Guangdong 518057 (CN)
(74) Representative: Lavoix
(86) International application number: PCT/CN2015/071141
(87) International publication number: WO 2016/061924

(57) **Abstract**

Disclosed in an embodiment of the present invention is a multi-screen sharing based application management method and device, storage medium, the method comprising: determining whether an application is an application to be shared when the application is detected to start; obtaining a security attribute of the application if the application is determined to be the application to be shared, and sharing with a remote user the application matching the attribute value according to the attribute value of the security attribute.

## Description

### TECHNICAL FIELD

The disclosure relates to application management techniques based on multi-screen sharing, and more particularly to an application management method and device based on multi-screen sharing, and a storage medium.

### BACKGROUND

Along with rapid development of wireless communication techniques, wireless-communication-based wireless display, such as a Wireless Fidelity-Display (WiFi-Display) technology, finds a more and more widespread utilization. A user may conveniently project content on a screen of a mobile phone or tablet equipment onto large-screen display equipment through such a wireless display connection, which is usually applied to aspects of multi-party conference, audio and video entertainment, games and the like. A wireless-display-based screen projection function refers to projecting content of a screen of the whole smart terminal (a Source) onto display equipment (a Sink). However, under many circumstances, a user usually desires to display only a part of content, particularly contents of some specific applications. Moreover, on the premise that Sink equipment supports an input control function, an application-level multi-screen sharing function may be provided, for example, a friend of the user may access and operate, on another piece of smart terminal equipment, an application of a local Source through a wireless display connection.

During multi-screen sharing, a user may usually consider privacy and security management problems, some applications may not be suitable to be shared, and some applications may be shared only after being subjected to some limitations on functions and rights. Therefore, it is necessary to correspondingly perform dynamic management so as to implement differentiated processing of different levels on different applications in a sharing mode and a normal mode.

Unfortunately, at present, there is yet no related technical solution for display security management based on multi-screen sharing.

### SUMMARY

In order to solve the aforementioned technical problem, embodiments of the disclosure provide an application management method and device based on multi-screen sharing and a storage medium, which may set a corresponding security attribute according to a privacy requirement of an application so as to implement hierarchical display sharing of the application.

The technical solutions of the embodiments of the disclosure are implemented as follows.

There is provided an application management method based on multi-screen sharing, including:
when it is detected that an application is started, it is determined whether the application is an application to be shared; and
when it is determined that the application is the application to be shared, a security attribute of the application is acquired, and sharing of the application corresponding to an attribute value of the security attribute is provided to a remote user according to the attribute value.

In an embodiment, before the application is started, the method may further include:
the security attribute is set for the application to be shared, the attribute value of the security attribute at least including full function sharing, local sharing and unshareable.

In an embodiment, the step that sharing of the application corresponding to the attribute value of the security attribute is provided to the remote user according to the attribute value may include:
when the attribute value of the security attribute of the application is full function sharing, the application is executed, and an execution result of the application is provided to the remote user in real time;
when the attribute value of the security attribute of the application is local sharing, it is determined whether it is currently in a sharing mode, if YES, a state of the security attribute of the application is set to be active, the application is executed, and the execution result of the application is limitedly provided to the remote user in real time, and when it is currently in a non-sharing mode, the state of the security attribute of the application is set to be inactive, and the execution result of the application is not provided to the remote user; and
when the attribute value of the security attribute of the application is unshareable, the application is executed, and the execution result of the application is not provided to the remote user.

In an embodiment, when the attribute value of the security attribute of the application is local sharing, the method may further include:
when it is detected that the application is required to be closed, if a state of the security attribute of the application is active, the state of the security attribute of the application is set to be inactive, and the application is closed.

In an embodiment, an application may be selected from local applications and registered as the application to be shared, and the registered application may be the application to be shared.

There is provided an application management device based on multi-screen sharing including a detection unit, a determination unit, an acquisition unit and a sharing provision unit, in which:
the detection unit is arranged to detect whether an application is started, and if the application is started, trigger the determination unit;
the determination unit is arranged to determine whether the application is an application to be shared, and when determining that the application is the application to be shared, trigger the acquisition unit;
the acquisition unit is arranged to acquire a security attribute of the application; and
the sharing provision unit may be arranged to provide sharing of the application corresponding to an attribute value of the security attribute acquired by the acquisition unit to a remote user according to the attribute value.

In an embodiment, the device may further include:
a setting unit arranged to set the security attribute for the application to be shared, the attribute value of the security attribute at least including full function sharing, local sharing and unshareable.

In an embodiment, the sharing provision unit may be further arranged to:
when the attribute value of the security attribute of the application is full function sharing, execute the application, and provide an execution result of the application to the remote user in real time;
when the attribute value of the security attribute of the application is local sharing, determine whether it is currently in a sharing mode, if YES, set a state of the security attribute of the application to be active, execute the application, and limitedly provide the execution result of the application to the remote user in real time, and when it is currently in a non-sharing mode, set the state of the security attribute of the application to be inactive, and not provide the execution result of the application to the remote user; and
when the attribute value of the security attribute of the application is unshareable, execute the application, and not provide the execution result of the application to the remote user.

In an embodiment, the device may further include: a closing unit;
when the attribute value of the security attribute of the application is local sharing, when it is detected by the detection unit that the application is required to be closed, and if a state of the security attribute of the application is active, the closing unit may be arranged to set the state of the security attribute of the application to be inactive, and close the application.

In an embodiment, the device may further include:
a registration unit arranged to select the application from local applications and register the selected application as the application to be shared, the registered application being the application to be shared.

There is further provided a storage medium having stored thereon a computer program arranged to execute the abovementioned application management method based on multi-screen sharing.

In the embodiments of the disclosure, security attributes of local applications are divided into different levels at first, including types of full function sharing, local sharing and unshareable; and for applications of which security attributes are local sharing, different active states are adopted for distinguishing a normal mode and an application sharing mode respectively, to provide a further rights management distinguishing mechanism. According to the embodiments of the disclosure, local user's normal use of the application is not affected, furthermore, when the application is shared to a remote user, it is also possible to meet requirements in terms of rights management of application functions on a local terminal and personal privacy management.

### BRIEF DESCRIPTION OF THE DRAWINGS

Fig. 1 is a flowchart of an application management method based on multi-screen sharing according to embodiment 1 of the disclosure;
Fig. 2 is a flowchart of an application management method based on multi-screen sharing according to embodiment 2 of the disclosure;
Fig. 3 is a flowchart of an application management method based on multi-screen sharing according to embodiment 3 of the disclosure; and
Fig. 4 is a structure diagram of an application management device based on multi-screen sharing according to an embodiment of the disclosure.

### DETAILED DESCRIPTION

In order to make the purpose, technical solutions and advantages of the disclosure clearer, the embodiments of the disclosure will be described below in detail with reference to the drawings. It is important to note that the embodiments in the disclosure and characteristics in the embodiments may be freely combined under the condition of no conflicts.

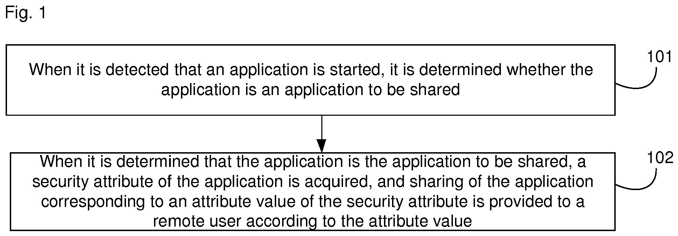

Fig. 1 is a flowchart of an application management method based on multi-screen sharing according to embodiment 1 of the disclosure. As shown in Fig. 1, the application management method based on multi-screen sharing of the example includes the following steps 101 to 102.

In step 101: when it is detected that an application is started, it is determined whether the application is an application to be shared.

Before Step 101 is executed, the application to be shared is registered. That is, local applications are divided into applications to be shared and applications not to be shared. The applications not to be shared are started and closed like normal applications, and these applications may not be displayed and shared to remote users. For the applications registered to be shared, these applications may be displayed and shared to the remote users.

In the step, when it is detected that the application is started, it is determined whether the application is the application registered to be shared, and if YES, the application is the application to be shared, otherwise the application is an application not to be shared.

It is required to set a security attribute for the application to be shared, and an attribute value of the security attribute at least includes full function sharing, local sharing and unshareable.

It is important to note that setting the security attribute of the application and performing registration for sharing on the application may be performed before a wireless connection is formed between local and remote users or after the wireless connection is formed.

In step 102: when it is determined that the application is the application to be shared, a security attribute of the application is acquired, and sharing of the application corresponding to an attribute value of the security attribute is provided to a remote user according to the attribute value.

In the step, providing sharing of the application corresponding to the attribute value of the security attribute to the remote user according to the attribute value specifically includes cases as follows.

When the attribute value of the security attribute of the application is full function sharing, the application is executed, and an execution result of the application is provided to the remote user in real time.

Herein, when the value of the security attribute of the application is full function sharing, the application does not involve any personal privacy of the user and may completely be shared and displayed to the remote user, and the remote user may also control the application without function limits.

When the attribute value of the security attribute of the application is local sharing, it is determined whether it is currently in a sharing mode, if YES, a state of the security attribute of the application is set to be active, the application is executed, and the execution result of the application is limitedly provided to the remote user in real time, and when it is currently in non-sharing mode, the state of the security attribute of the application is set to be inactive, and the execution result of the application is not provided to the remote user.

Herein, when the attribute value of the security attribute of the application is local sharing, the application may be shared to the remote user in the sharing mode, its security attribute may be set into the active state, and some functions or rights may further be limited according to the active state to avoid any private information of the local user being involved at the same time when the remote user shares the application; while in the non-sharing mode, the application may run normally and the local user is not limited to use the application, which brings convenience to normal use of the local user, and in the non-sharing mode, running data of the application may also not be shared to the remote user.

When the attribute value of the security attribute of the application is unshareable, the application is executed, and the execution result of the application is not provided to the remote user.

Herein, when the attribute value of the security attribute of the application is unshareable, it is equivalent to that the application is an application not registered to be shared and is equivalent to a local ordinary application not to be shared.

The essence of the technical solutions of the embodiments of the disclosure will be further elaborated below with a specific example.

In the example, descriptions are made by taking local user equipment and remote display, which establish a WiFi-Display connection, as an example.

The local user equipment (as the Source) establishes a wireless display connection with display equipment (as the Sink), and then the Source sets applications which may be shared and initializes security attributes of different levels. Then, an application, such as an application A, is selected from the applications which may be shared, and registered as an application to be shared, and then the application A is started. Before the application A is started, a system may automatically determine the application to be started, and if the application to be started is an application to be shared, the system updates a security attribute of the application (corresponding to a sharing mode), otherwise executes normal starting.

If a user normally starts a certain application, the application may not be registered as an application to be shared, so that its security attribute may not be updated.

In another usage scenario, when the application A is stopped to be shared, the Source may also continue sharing another application, such as an application B, and at this moment, the security attribute of the application B may be correspondingly updated, while the application A may be closed and its security attribute is recovered (corresponding to a normal mode).

After some changes are made in the abovementioned usage scenarios, a basic rule is still applicable. For example, the Source initiates a wireless display connection again during application starting, and further determines whether it is necessary to update the security attribute.

Herein, after security attributes of shared applications are updated (activated), during practical running, their function use or calling rights or accessible equipment resources may correspondingly change, and a specific implementation mode may not be limited here. For example, part of function entries may be determined by virtue of the abovementioned attributes in some system applications, and the applications with the attributes may also be locally limited in terms of right access by right management control. In addition, when a remote Sink user uses a shared application, the user of the Source may simultaneously operate the local terminal equipment, but may not run the same application because each application corresponds to only one security attribute at the same time, so that resource conflicts are avoided.

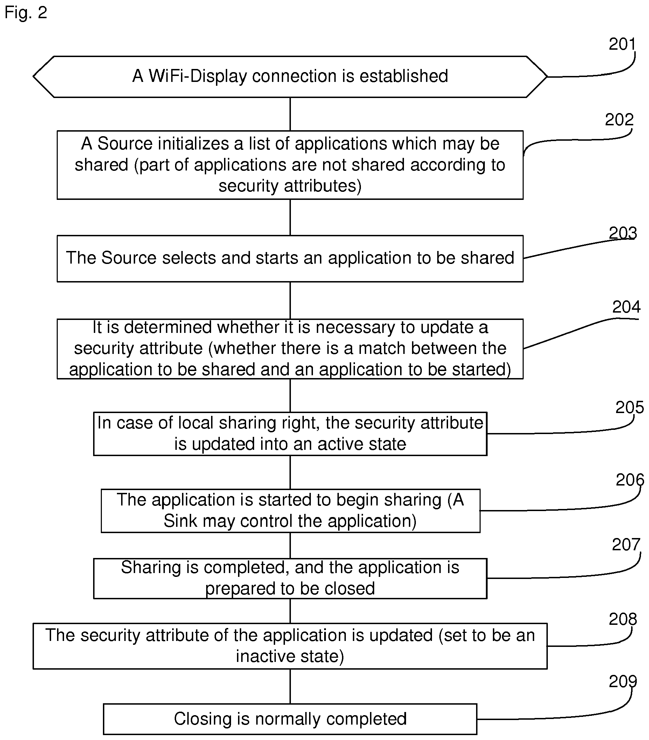

Fig. 2 is a flowchart of an application management method based on multi-screen sharing according to embodiment 2 of the disclosure. As shown in Fig. 2, the application management method based on multi-screen sharing of the example includes the following steps 201 to 209.

In step 201: a Source is started, a system enters a standby state after being initialized, and the Source and a Sink establish a WiFi-Display connection after mutual scanning.

In step 202: the Source initializes security attributes of applications, including "full function sharing", "local sharing" and "unshareable", herein the applications with the "local sharing" attribute are required to be dynamically updated according to whether it is in a sharing mode, and the attribute has two states: active and inactive, and is set to be the "inactive" state during initialization.

In step 203: the Source selects an application to be shared from a list of applications with attributes "full function sharing" and "local sharing", registers the current application as the application to be shared in the system, and then starts the application, herein this operation may usually be completed by a sharing management sub-module, including management over the WiFi-Display connection.

In step 204: when an application is started, an application management sub-module is required to determine whether there is a match between the application to be started and the application to be shared, i.e., whether they are a same application.

In step 205: if the application to be started is the application to be shared, a security attribute is determined, and the state is correspondingly updated in case of local right.

In step 206: after the abovementioned pre-processing is completed, the application is normally started.

In step 207: after a period of time, the user completes sharing, and is going to close the application on the Source.

In step 208: before the closing operation, if determining the security attribute of the application is "local sharing" and is in the "active" state, the application management sub-module updates it into the "inactive" state.

In step 209: closing processing of the application is completed.

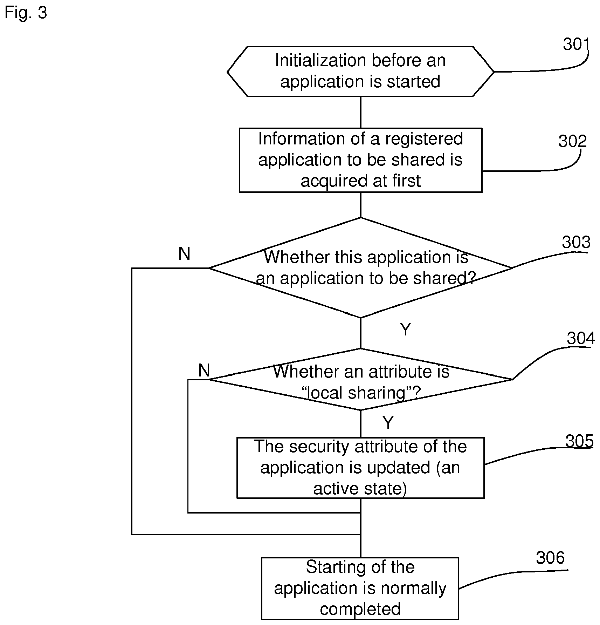

Fig. 3 is a flowchart of an application management method based on multi-screen sharing according to embodiment 3 of the disclosure. As shown in Fig. 3, the application management method based on multi-screen sharing of the example includes the following steps 301 to 306.

In step 301: initialization work during starting is executed, including that an application management sub-module acquires an application name, security attribute, starting parameter and the like of an application to be started.

In step 302: the application management sub-module acquires a name of a registered application to be shared from a system.

In step 303: it is determined whether the registered application to be shared is the same as the application to be started, and if NO, Step 306 is executed for normal starting.

In step 304: if they are the same application, whether its security attribute is "local sharing" is determined, and if NO, Step 306 is executed for normal starting (other attributes do not involve state modification).

In step 305: if the security attribute of the current application is "local sharing", a state of the attribute is set to be an "active" state to limit functions, rights or resource access to a certain extent.

In step 306: the application is normally started.

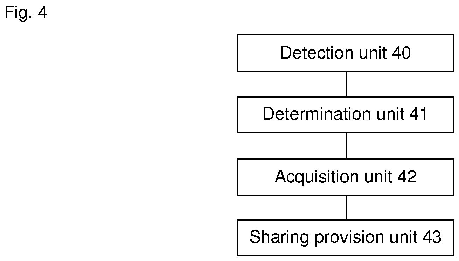

Fig. 4 is a structure diagram of an application management device based on multi-screen sharing according to an embodiment of the disclosure. As shown in Fig. 4, the application management device based on multi-screen sharing of the example includes a detection unit 40, a determination unit 41, an acquisition unit 42 and a sharing provision unit 43, wherein
the detection unit 40 is arranged to detect whether an application is started, and if the application is started, trigger the determination unit 41;
the determination unit 41 is arranged to determine whether the application is an application to be shared, and when determining that the application is the application to be shared, trigger the acquisition unit 42;
the acquisition unit 42 is arranged to acquire a security attribute of the application; and
the sharing provision unit 43 is arranged to provide sharing of the application corresponding to an attribute value of the security attribute acquired by the acquisition unit to a remote user according to the attribute value.

On the basis of the application management device based on multi-screen sharing shown in Fig. 4, the device further includes:
a setting unit (not shown in Fig. 4) arranged to set the security attribute for the application to be shared, the attribute value of the security attribute at least including full function sharing, local sharing and unshareable.

In the embodiment of the disclosure, the sharing provision unit 43 is further arranged to:
when the attribute value of the security attribute of the application is full function sharing, execute the application, and provide an execution result of the application to the remote user in real time;
when the attribute value of the security attribute of the application is local sharing, determine whether it is currently in a sharing mode, if YES, set a state of the security attribute of the application to be active, execute the application, and limitedly provide the execution result of the application to the remote user in real time, and when it is currently in a non-sharing mode, set the state of the security attribute of the application to be inactive, and not provide the execution result of the application to the remote user.

Herein, in the embodiment of the disclosure, when the attribute value of the security attribute of the application is local sharing, the application may be shared to the remote user in the sharing mode, its security attribute may be set into the active state, and some functions or rights may further be limited according to the active state to avoid any private information of the local user being involved at the same time when the remote user shares the application; while in the non-sharing mode, the application may run normally and the local user is not limited to use the application, which brings convenience to normal use of the local user, and in the non-sharing mode, running data of the application may also not be shared to the remote user.

When the attribute value of the security attribute of the application is unshareable, execute the application, and not provide the execution result of the application to the remote user.

On the basis of the application management device based on multi-screen sharing shown in Fig. 4, the device further includes: a closing unit (not shown in Fig. 4); and
when the attribute value of the security attribute of the application is local sharing, the detection unit is further arranged to detect that the application is required to be closed, and if the state of the security attribute of the application is active, the closing unit is arranged to set the state of the security attribute of the application to be inactive, and close the application.

On the basis of the application management device based on multi-screen sharing shown in Fig. 4, the device further includes:
a registration unit (not shown in Fig. 4) arranged to select the application from local applications and register it as the application to be shared, the registered application being the application to be shared.

Those skilled in the art should know that functions of each processing unit in a single board testing device of the embodiment of the disclosure may be understood with reference to related descriptions of a single board testing method of the abovementioned embodiment, and each processing unit in the embodiment of the disclosure may be implemented through an analogue circuit which realizes the functions of the embodiment of the disclosure, and may also be implemented by running of software which executes the functions of the embodiment of the disclosure on smart equipment.

The embodiments of the disclosure further record a storage medium, in which a computer program is stored, the computer program being arranged to execute the application management method based on multi-screen sharing of each abovementioned embodiment.

In some embodiments provided by the disclosure, it should be understood that the disclosed method and smart equipment may be implemented in another manner. The equipment embodiment described above is only schematic, and for example, division of the units is only logic function division, and other division manners may be adopted during practical implementation. For example, multiple units or components may be combined or integrated into another system, or some characteristics may be neglected executed. In addition, coupling, or direct coupling or communication connection between each displayed or discussed component may be indirect coupling or communication connection, implemented through some interfaces, of the equipment or the units, and may be electrical and mechanical or adopt other forms.

The abovementioned units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two unit may also be integrated into a unit. The abovementioned integrated unit may be implemented in a hardware form, and may also be implemented in form of hardware and software function unit.

Those skilled in the art should also know that: all or part of the steps of the abovementioned method embodiment may be implemented by instructing related hardware through an application, the abovementioned application may be stored in a computer-readable storage medium, and when the application is executed, the steps of the abovementioned method embodiments are executed; and the storage medium includes: various media capable of storing application codes such as mobile storage equipment, a Read-Only Memory (ROM), a Random Access Memory (RAM), a magnetic disk or an optical disk.

Or, when being implemented in form of software function module and sold or used as an independent product, the integrated unit of the embodiments of the disclosure may also be stored in a computer-readable storage medium. Based on such an understanding, the technical solutions of the embodiments of the disclosure substantially or parts making contributions to a conventional art may be embodied in form of software product, and the computer software product is stored in a storage medium, including a plurality of instructions arranged to enable a piece of computer equipment (which may be a personal computer, a server, network equipment or the like) to execute all or part of the method in each embodiment of the disclosure. The abovementioned storage medium includes: various media capable of storing application codes such as mobile storage equipment, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure.

### INDUSTRIAL APPLICABILITY

According to the disclosure, security attributes of local applications are divided into different levels, and for applications of which security attributes are local sharing, different active states are adopted for distinguishing a normal mode and an application sharing mode respectively, to provide a further rights management distinguishing mechanism, so that it is possible to meet requirements in terms of rights management of application functions on a local terminal and personal privacy management.

## Claims

1. An application management method based on multi-screen sharing, comprising:
when it is detected that an application is started, determining whether the application is an application to be shared; and
when it is determined that the application is the application to be shared, acquiring a security attribute of the application, and providing sharing of the application corresponding to an attribute value of the security attribute to a remote user according to the attribute value.

2. The method according to claim 1, further comprising: before the application is started,
setting the security attribute for the application to be shared, the attribute value of the security attribute at least comprising full function sharing, local sharing and unshareable.

3. The method according to claim 2, wherein providing sharing of the application corresponding to the attribute value of the security attribute to the remote user according to the attribute value comprises:
when the attribute value of the security attribute of the application is full function sharing, executing the application, and providing an execution result of the application to the remote user in real time;
when the attribute value of the security attribute of the application is local sharing, determining whether it is currently in a sharing mode, if YES, setting a state of the security attribute of the application to be active, executing the application, and limitedly providing the execution result of the application to the remote user in real time, and when it is currently in a non-sharing mode, setting the state of the security attribute of the application to be inactive, and not providing the execution result of the application to the remote user;
when the attribute value of the security attribute of the application is unshareable, executing the application, and not providing the execution result of the application to the remote user.

4. The method according to claim 2, further comprising: when the attribute value of the security attribute of the application is local sharing,
when it is detected that the application is required to be closed, if a state of the security attribute of the application is active, setting the state of the security attribute of the application to be inactive, and closing the application.

5. The method according to any one of claims 1-4, further comprising:
selecting an application from local applications, and registering the selected application as the application to be shared, the registered application being the application to be shared.

6. An application management device based on multi-screen sharing, comprising:
a detection unit, a determination unit, an acquisition unit and a sharing provision unit,
wherein the detection unit is arranged to detect whether an application is started, and if the application is started, trigger the determination unit;
the determination unit is arranged to determine whether the application is an application to be shared, and when determining that the application is the application to be shared, trigger the acquisition unit;
the acquisition unit is arranged to acquire a security attribute of the application; and
the sharing provision unit is arranged to provide sharing of the application corresponding to an attribute value of the security attribute acquired by the acquisition unit to a remote user according to the attribute value.

7. The device according to claim 6, further comprising:
a setting unit arranged to set the security attribute for the application to be shared, the attribute value of the security attribute at least comprising full function sharing, local sharing and unshareable.

8. The device according to claim 7, wherein the sharing provision unit is further arranged to:
when the attribute value of the security attribute of the application is full function sharing, execute the application, and provide an execution result of the application to the remote user in real time;
when the attribute value of the security attribute of the application is local sharing, determine whether it is currently in a sharing mode, if YES, set a state of the security attribute of the application to be active, execute the application, and limitedly provide the execution result of the application to the remote user in real time, and when it is currently in a non-sharing mode, set the state of the security attribute of the application to be inactive, and not provide the execution result of the application to the remote user;
when the attribute value of the security attribute of the application is unshareable, execute the application, and not provide the execution result of the application to the remote user.

9. The device according to claim 7, further comprising a closing unit,
wherein when the attribute value of the security attribute of the application is local sharing, when it is detected by the detection unit that the application is required to be closed, and if a state of the security attribute of the application is active, the closing unit is arranged to set the state of the security attribute of the application to be inactive, and close the application.

10. The device according to any one of claims 6-9, further comprising:
a registration unit arranged to select an application from local applications and register the selected application as the application to be shared, the registered application being the application to be shared.

11. A storage medium having stored thereon a computer program arranged to execute the application management method based on multi-screen sharing according to any one of claims 1-5.
